# EUROPÄISCHE PATENTSCHRIFT

(11) **EP 3 785 024 B1**
(45) Veröffentlichungstag und Bekanntmachung des Hinweises auf die Patenterteilung: **15.06.2022**
(21) Anmeldenummer: 19716105.2
(22) Anmeldetag: 01.04.2019
(51) Int. Cl.: G01N 27/07, G01N 29/024

(54) **SENSORVORRICHTUNG ZUM BESTIMMEN DER ELEKTRISCHEN LEITFÄHIGKEIT EINES FLUIDS UND DER SCHALLGESCHWINDIGKEIT IM FLUID**
SENSING APPARATUS FOR DETERMINING THE ELECTRICAL CONDUCTIVITY OF A FLUID AND THE SOUND VELOCITY IN THE FLUID
DISPOSITIF CAPTEUR DE DETERMINATION DE LA CONDUCTIVITE ELECTRIQUE D'UN FLUIDE ET LA VELOCITE DU SON DANS LE FUIDE

(30) Priorität: 25.04.2018 DE 102018206360
(43) Veröffentlichungstag der Anmeldung: 03.03.2021
(73) Patentinhaber: Vitesco Technologies Germany GmbH, 93055 Regensburg (DE)
(72) Erfinder: MEYER, Daniel, 81737 München (DE); PFEIFFER, Karl-Friedrich, 81737 München (DE)
(74) Vertreter: Vitesco Technologies
(86) Internationale Anmeldenummer: PCT/EP2019/058162
(87) Internationale Veröffentlichungsnummer: WO 2019/206573

(56) Entgegenhaltungen:
- WO-A1-2012/034854
- DE-A1-102005 043 699
- DE-B3-102004 023 734
- GB-A- 2 476 317
- US-A- 5 851 837
- US-A1- 2003 119 198
- US-A1- 2011 153 083

## Beschreibung

Die vorliegende Erfindung betrifft eine Sensorvorrichtung zum Bestimmen der elektrischen Leitfähigkeit eines Fluids und der Schallgeschwindigkeit im Fluid, insbesondere in Fluiden für Brennkraftmaschinen, wie beispielsweise Wasser für eine Wassereinspritzung.

Konduktive Leitfähigkeitssensoren werden in vielfältigen Anwendungen zur Messung einer Leitfähigkeit eines Mediums eingesetzt. Die bekanntesten konduktiven Leitfähigkeitssensoren sind die so genannten Zwei- oder Vierelektrodensensoren. Zweielektrodensensoren weisen zwei im Messbetrieb in das Medium eingetauchte und mit einer Gleich- oder Wechselspannung beaufschlagte Elektroden auf. Eine an die beiden Elektroden angeschlossene Messelektronik misst eine elektrische Impedanz der Leitfähigkeitsmesszelle, aus der dann anhand einer von durch die Geometrie und die Beschaffenheit der Messzelle gegebenen vorab bestimmten Zellkonstante ein spezifischer Widerstand bzw. ein spezifischer Leitwert des in der Messzelle befindlichen Mediums ermittelt wird. Vierelektrodensensoren weisen vier im Messbetrieb in das Medium eingetauchte Elektroden auf, von denen zwei als sogenannte Strom- und zwei als sogenannte Spannungselektroden betrieben werden. Zwischen den beiden Stromelektroden wird im Messbetrieb eine Gleich- oder Wechselspannung angelegt und damit ein Gleich- oder Wechselstrom in das Medium eingespeist. Der eingespeiste Strom bewirkt eine zwischen den Spannungselektroden anliegende Potentialdifferenz, die durch eine vorzugsweise stromlose Messung bestimmt wird. Auch hier wird mittels einer an die Strom- und Spannungselektroden angeschlossenen Messelektronik, die sich aus dem eingespeisten Strom und der gemessenen Potentialdifferenz ergebende Impedanz der Leitfähigkeitsmesszelle bestimmt, aus der dann anhand einer von durch die Geometrie und die Beschaffenheit der Messzelle gegebenen vorab bestimmten Zellkonstanten ein spezifischer Widerstand bzw. ein spezifischer Leitwert des in der Messzelle befindlichen Mediums bestimmt wird.

Aus der EP 1 089 072 A2 ist ein Leitfähigkeitssensor bekannt, welcher ein kreiszylindrisches Gehäuse aufweist, wobei metallene Messelektroden planar an einer kreisflächenförmigen Stirnwandung des kreiszylinderartigen Gehäuses angeordnet sind. Die metallenen Messelektroden bilden dabei zwei Spannungselektroden und zwei Stromelektroden. Die Spannungselektroden sind kreisflächenförmig ausgebildet und von den zwei kreis- oder kreisringflächenförmigen, im Wesentlichen in einem Halbkreis angeordneten Stromelektroden um-geben.

Weitere Leitfähigkeitssensoren sind aus der US 4 227 151 A, EP 0 386 660 A1 und DE 10 2010 042 637 A1 bekannt.

Ferner werden (ultra) schallbasierte Sensoren zum Bestimmen einer Schallgeschwindigkeit eines Schallsignals in einem Fluid in einem Fluidbehälter eingesetzt, die einen Schallwandler sowohl als Schallerzeuger als auch als Schallempfänger aufweisen. Für eine Bestimmung der Schallgeschwindigkeit des Schallsignals im Fluid können mittels des Schallwandlers Schallimpulse in das zu vermessende Fluid abgegeben werden. Aus der Laufzeit der Schallimpulse können Rückschlüsse auf die Schallgeschwindigkeit des Schallsignals im Fluid gezogen werden. Hierzu ist ein Referenzreflektor unter einem vorbestimmten Abstand zum Schallwandler angeordnet.

Beispielsweise ist eine Vorrichtung zum Bestimmen einer Schallgeschwindigkeit eines Schallsignals in einem Fluid aus der DE 10 2014 213 233 A1 bekannt.

Der vorliegenden Erfindung liegt die Aufgabe zugrunde, eine Sensorvorrichtung bereitzustellen, die sowohl die elektrische Leitfähigkeit eines Fluids als auch die Schallgeschwindigkeit im Fluid auf einfache und kostengünstige Weise erfassen kann.

Diese Aufgabe wird mit einer Sensorvorrichtung gemäß unabhängigem Anspruch 1 gelöst. Vorteilhafte Ausgestaltungen sind in den Unteransprüchen gegeben.

Der vorliegenden Erfindung liegt im Wesentlichen der Gedanke zugrunde, einen Leitfähigkeitssensor mit einem Schallgeschwindigkeitssensor derart zu kombinieren, dass die Elektroden des Leitfähigkeitssensors sowohl als elektrische Elemente zum Erfassen der elektrischen Leitfähigkeit als auch als Referenz- bzw. Reflexionselemente für die vom Schallwandler des Schallgeschwindigkeitssensors ausgesandten Schallwellen dienen. Somit kann gegenüber einer bloßen Kombination eines Leitfähigkeitssensors und eines Schallgeschwindigkeitssensors ein separates Referenz- bzw. Reflexionselement des Schallgeschwindigkeitssensors entfallen, was zu einem vereinfachten Aufbau und Einsparungen bei benötigtem Bauraum, Kosten und Gewicht führen kann.

Gemäß eines Aspekts der vorliegenden Erfindung ist eine Sensorvorrichtung zum Bestimmen elektrischen Leitfähigkeit eines Fluids und der Schallgeschwindigkeit im Fluid offenbart, die zumindest ein Elektrodenpaar, das eine erste Elektrode und eine von der ersten Elektrode elektrisch isolierte zweite Elektrode aufweist, die jeweils mit dem Fluid in direktem Kontakt stehen, und dazu ausgebildet ist, die elektrische Leitfähigkeit des Fluids nach dem konduktiven Prinzip zu bestimmen, und einen Schallwandler aufweist, der dazu ausgebildet ist, Schallwellen derart in das Fluid auszusenden, dass die Schallwellen an der ersten Elektrode und/oder zweiten Elektrode zum Schallwandler zurück reflektiert werden, und die zumindest an der ersten Elektrode und/oder zweiten Elektrode zum Schallwandler zurück reflektierten Schallwellen zum Bestimmen der Schallgeschwindigkeit im Fluid zu empfangen.

Somit dient zumindest eine der Elektroden des Elektrodenpaars zum einen als elektrisch arbeitendes Element zum Bestimmen der elektrischen Leitfähigkeit des Fluids und zum anderen als Referenz- bzw. Reflexionselement für den Schallwandler zum Bestimmen der Schallgeschwindigkeit im Fluid. Das Erfassen der elektrischen Leitfähigkeit und der Schallgeschwindigkeit im Fluid kann unterschiedliche, sich ergänzende Informationen über die Qualität und/oder die Zusammensetzung des Fluids liefern.

In einer bevorzugten Ausgestaltung der erfindungsgemäßen Sensorvorrichtung sind die erste Elektrode und/oder die zweite Elektrode zumindest abschnittsweise im Wesentlichen zylinderförmig, vorzugsweise stabförmig. Die Querschnittsform für den abschnittsweisen Zylinderbereich der ersten Elektrode und/oder der zweiten Elektrode kann dabei kreisförmig, elliptisch, oval, rechteckig, quadratisch oder jeder weitere polygonale Gestalt ausgestaltet sein.

In einer vorteilhaften Ausgestaltung der erfindungsgemäßen Sensorvorrichtung weisen die erste Elektrode und/oder die zweite Elektrode eine ebene Reflexionsfläche auf, die dazu ausgebildet ist, die vom Schallwandler ausgesandten Schallwellen zumindest teilweise zurück zum Schallwandler zu reflektieren. Diese ebene Reflexionsfläche kann insbesondere den an den Schallwandler zurück reflektierten Anteil der vom Schallwandler ausgesandten Schallwellen derart erhöhen, dass die Schallgeschwindigkeit im Fluid auch unter ungünstigen Bedingungen möglichst zuverlässig bestimmt werden kann.

Vorzugsweise ist die erste Elektrode unter einem vorbestimmten ersten Abstand zum Schallwandler angeordnet und die zweite Elektrode unter einem zum ersten Abstand unterschiedlichen vorbestimmten zweiten Abstand zum Schallwandler angeordnet. Insbesondere ist es dabei bevorzugt, dass die vom Schallwandler ausgesandten Schallwellen an sowohl der ersten Elektrode als auch der zweiten Elektrode reflektieren und vom Schallwandler wieder empfangen werden, damit basierend auf einem Laufzeitunterschied zwischen den an der ersten Elektrode reflektierten Schallwellen und den an der zweiten Elektrode reflektierten Schallwellen die Schallgeschwindigkeit der Schallwellen im Fluid bestimmt werden kann. Auf diese Weise geht nur die Schallgeschwindigkeit im Fluid in die Messung der Schallgeschwindigkeit ein. Das heißt, dass eventuell zwischen dem Schallwandler und dem Fluid liegende Schichten, die notwendig sein können, wenn der Schallwandler zumindest teilweise außerhalb des Behälters angeordnet ist, keinen Einfluss auf die Messung haben können.

In einer weiteren bevorzugten Ausgestaltung weist die erfindungsgemäße Vorrichtung ferner ein weiteres Elektrodenpaar auf, das eine dritte Elektrode und eine von der dritten Elektrode elektrisch isolierte vierte Elektrode umfasst, die jeweils mit dem Fluid in direktem Kontakt stehen und dazu ausgebildet ist, die elektrische Leitfähigkeit des Fluids nach dem konduktiven Prinzip zu bestimmen. In einer solchen bevorzugten Ausgestaltung weist die erfindungsgemäße Sensorvorrichtung eine Vierelektrodenmesszelle auf, von denen die zwei Elektroden des ersten Elektrodenpaars als sogenannte Strom- und die zwei Elektroden des weiteren Elektrodenpaars als sogenannte Spannungselektroden betrieben werden.

In einer vorteilhaften Ausgestaltung der erfindungsgemäßen Sensorvorrichtung sind die dritte Elektrode und/oder vierte Elektrode in einem von der ersten Elektrode und/oder zweiten Elektrode erzeugten Schallschatten derart angeordnet, dass die vom Schallwandler ausgesandten Schallwellen an der dritten Elektrode und/oder vierten Elektrode nicht zurück zum Schallwandler reflektiert werden. Dadurch können die vom Schallwandler ausgesandten Schallwellen lediglich an der ersten Elektrode und/oder zweiten Elektrode zurück zum Schallwandler reflektiert werden und eben nicht an der dritten Elektrode und/oder vierten Elektrode. Damit kann zumindest teilweise vermieden werden, dass die Bestimmung der Schallgeschwindigkeit durch Überlagerung von mehreren Schallreflexionen erschwert oder gestört wird.

Bevorzugt weisen die dritte Elektrode und/oder vierte Elektrode sich senkrecht zur Schallwellenausbreitungsrichtung erstreckende Ausdehnungen auf, die jeweils kleiner sind als die sich senkrecht zur Schallwellenausbreitungsrichtung erstreckende Ausdehnung der ersten Elektrode und/oder zweiten Elektrode, ohne ihre Funktionalität für die elektrische Messung einzuschränken. Dadurch kann erreicht werden, dass der von der ersten Elektroden und/oder zweiten Elektrode erzeugte Schallschatten groß genug ist, um zu vermeiden, dass die Schallwellen auch an der dritten Elektrode und/oder vierten Elektrode reflektiert werden können. An dieser Stelle sei anzumerken, dass die Querschnittsformen der ersten Elektrode, zweiten Elektrode, dritten Elektrode und vierten Elektrode nicht identisch sein müssen und folglich unterschiedlich sein können.

Die erfindungsgemäße Sensorvorrichtung weist in einer vorteilhaften Ausgestaltung ferner ein Umlenkelement auf, das dazu ausgebildet ist, die vom Schallwandler ausgesandten Schallwellen zumindest teilweise in Richtung der Fluidoberfläche zum Bestimmen des Fluidniveaus umzulenken, von der die Schallwellen weder über das Umlenkelement zurück zum Schallwandler reflektiert werden. Somit kann die Sensorvorrichtung auch dazu betrieben werden, den Füllstand des Fluids im Fluidbehälter zu bestimmen, wobei die Bestimmung des Füllstands des Fluids im Fluidbehälter zumindest teilweise auf der bestimmten Schallgeschwindigkeit im Fluid basieren kann.

In einer weiteren vorteilhaften Ausgestaltung der erfindungsgemäßen Sensorvorrichtung ist der Schallwandler ferner dazu ausgebildet, zumindest teilweise außerhalb des Fluidbehälters angeordnet zu werden. In einer solchen Ausgestaltung ist der Schallwandler beispielsweise von außen am Boden oder an einer Seitenwand des Fluidbehälters angebracht, wobei die Schallwellen dann zunächst durch die Fluidbehälterwandung gelangen und erst dann in das Fluid eingekoppelt werden.

Weitere Vorteile, Merkmale und Ausgestaltungen der vorliegenden Erfindung werden dem Fachmann durch Ausüben der hierin beschriebenen Lehre und Betrachten der beiliegenden Zeichnungen ersichtlich, in denen:
- Fig. 1: eine schematische Draufsicht einer erfindungsgemäßen Ausgestaltung einer Sensorvorrichtung in einem Fluidbehälter zeigt,
- Fig. 2: eine schematische Draufsicht einer weiteren erfindungsgemäßen Ausgestaltung einer Sensorvorrichtung in einem Fluidbehälter zeigt,
- Fig. 3: eine schematische Draufsicht einer noch weiteren erfindungsgemäßen Ausgestaltung einer Sensorvorrichtung in einem Fluidbehälter zeigt,
- Fig. 4: eine Querschnittsansicht einer beispielhaften Ausgestaltung einer Elektrode einer erfindungsgemäßen Sensorvorrichtung zeigt,
- Fig. 5: eine Querschnittsansicht einer weiteren beispielhaften Ausgestaltung einer Elektrode einer erfindungsgemäßen Sensorvorrichtung zeigt,
- Fig. 6: eine Querschnittsansicht einer noch weiteren beispielhaften Ausgestaltung einer Elektrode einer erfindungsgemäßen Sensorvorrichtung zeigt,
- Fig. 7: eine schematische Draufsicht einer noch weiteren erfindungsgemäßen Ausgestaltung einer Sensorvorrichtung in einem Fluidbehälter zeigt, und
- Fig. 8: eine Seitenansicht der erfindungsgemäßen Sensorvorrichtung der Fig. 7 zeigt.

Elemente gleicher Konstruktion oder Funktion sind figurenübergreifend mit den gleichen Bezugszeichen gekennzeichnet. Aus Gründen der Übersichtlichkeit sind gegebenenfalls nicht in allen dargestellten Figuren sämtliche Elemente mit Bezugszeichen gekennzeichnet.

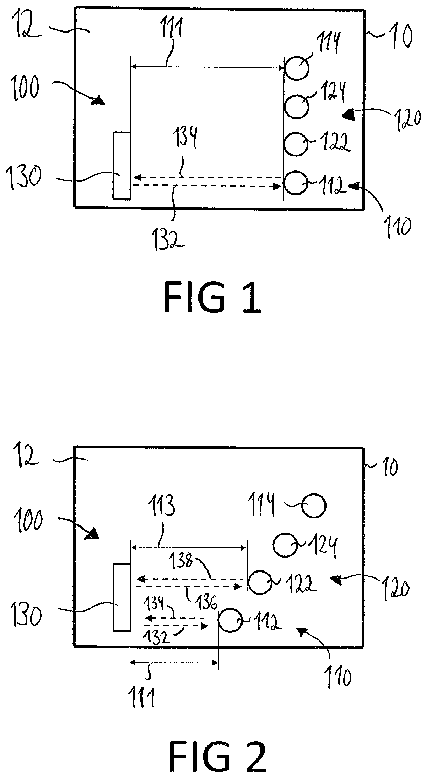

Die Fig. 1 zeigt eine schematische Draufsicht einer erfindungsgemäßen Ausgestaltung einer Sensorvorrichtung 100, die in einem Fluidbehälter 10 angeordnet ist. In dem Fluidbehälter 10 befindet sich das zu vermessende Fluid 12, das beispielsweise ein im Automobilbereich verwendetes Fluid sein kann, wie beispielsweise Wasser für eine Wassereinspritzung, ein Kühlmittel für einen Kühlmittelkreislauf einer Brennkraftmaschine eines Fahrzeugs, eine Waschwassermischung zur Reinigung von Scheiben, Scheinwerfern oder optischen Sensoren eines Fahrzeugs oder auch andere Fluide, deren Zustand und/oder Zusammensetzung für den Betrieb der Brennkraftmaschine von Interesse sind.

Die Sensorvorrichtung 100 ist dazu ausgebildet, die elektrische Leitfähigkeit des Fluids 12 und die Schallgeschwindigkeit im Fluid 12 zu bestimmen. Hierzu weist die Sensorvorrichtung 100 zumindest ein Elektrodenpaar 110 auf, das eine erste Elektrode 112 und eine von der ersten Elektrode 112 elektrisch isolierte zweite Elektrode 114 aufweist, die jeweils im Wesentlichen stabförmige Elektroden sind. Sowohl die erste Elektrode 112 als auch die zweite Elektrode 114 sind jeweils mit dem Fluid in direktem Kontakt. Das Elektrodenpaar 110 ist dazu ausgebildet, die elektrische Leitfähigkeit des Fluids nach dem konduktiven Prinzip zu bestimmen. Hierzu wird insbesondere eine vorbestimmte elektrische Spannung an den Elektroden 112, 114 des Elektrodenpaars 110 angelegt und der durch dieses angelegte Spannung zwischen der ersten Elektrode 112 und der zweiten Elektrode 114 resultierende elektrische Strom als Maß für die elektrische Leitfähigkeit gemessen.

Die erste Elektrode 112 und die zweite Elektrode 114 sind dabei jeweils unter einem vorbestimmten ersten Abstand 111 zu einem Schallwandler 130 angeordnet, der dazu ausgebildet ist, Schallwellen derart in das Fluid auszusenden, dass die Schallwellen zumindest an der ersten Elektrode 112 zum Schallwandler 130 zurück reflektiert werden, und die zumindest an der ersten Elektrode 112 reflektierten Schallwellen zum Bestimmen der Schallgeschwindigkeit im Fluid 12 zu empfangen. Die Ausbreitungsrichtung der vom Schallwandler 130 ausgesandten Schallwellen ist in der Fig. 1 durch den Pfeil 132 gekennzeichnet und die Ausbreitungsrichtung der an der ersten Elektrode 112 an den Schallwandler 130 zurück reflektierten Schallwellen ist in der Fig. 1 durch den Pfeil 134 gekennzeichnet.

Die vom Schallwandler 130 ausgesandten Schallwellen sind vorzugsweise Ultraschallwellen mit einer Frequenz zwischen ungefähr 20 kHz und ungefähr 10 MHz.

Der Schallwandler 130 ist in dem in der Fig. 1 dargestellten Ausführungsbeispiel innerhalb des Fluidbehälters 10 angeordnet. In alternativen Ausgestaltungen der erfindungsgemäßen Sensorvorrichtung kann es vorteilhaft sein, den Schallwandler 130 außerhalb des Fluidbehälters 10 anzuordnen, wobei in einer solchen Ausgestaltung die vom Schallwandler 130 ausgesandten Schallwellen zunächst durch die Wandung des Fluidbehälters 10 gelangen und dann in das Fluid 12 eingekoppelt werden.

In der Fig. 1 ist ferner dargestellt, dass die erfindungsgemäße Sensorvorrichtung 100 ein weiteres Elektrodenpaar 120 aufweist, das eine dritte Elektrode 122 und eine von der dritten Elektrode 122 elektrisch isolierte vierte Elektrode 124 aufweist, die jeweils mit dem Fluid 12 in direktem Kontakt stehen. Das weitere Elektrodenpaar 120 ist ebenfalls dazu ausgebildet, die elektrische Leitfähigkeit des Fluids nach dem konduktiven Prinzip zu bestimmen. Insbesondere dient das weitere Elektrodenpaar 120 dazu, durch eine stromlose Messung der Potentialdifferenz Störeinflüsse durch Polarisationseffekte oder Ablagerungen auf den Elektroden zu minimieren und damit auch Alterungserscheinungen des Sensors zu minimieren.

Die dritte Elektrode 122 und die vierte 124 sind vorzugsweise in einem elektrischen Potentialfeld zwischen der ersten Elektrode 112 und der zweiten Elektrode 114 angeordnet und weisen ebenfalls den vorbestimmten ersten Abstand 111 zum Schallwandler 130 auf. Der vorbestimmte erste Abstand 111 ist insbesondere der Abstand zwischen dem Schallwandler 130 und den Elektrodenpaaren 110, 120 in Ausbreitungsrichtung 132 der vom Schallwandler 130 ausgesandten Schallwellen.

Die erste Elektrode 112 hat bei der Sensorvorrichtung 100 der Fig. 1 eine Doppelfunktion, nämlich das Bestimmen der elektrischen Leitfähigkeit des Fluids 12 und das Darstellen eines Referenz- bzw. Reflexionselements für den Schallwandler 130 zum Bestimmen der Schallgeschwindigkeit im Fluid 12. Somit ist es mit der erfindungsgemäßen Sensorvorrichtung 100 möglich, ein separates Referenz- bzw. Reflexionselement einzusparen, was zu einer Reduktion des benötigten Bauraums, der Kosten und des Gewichts der gesamten Sensorvorrichtung 100 führen kann.

Die Fig. 2 zeigt eine weitere erfindungsgemäße Ausgestaltung der bereits in der Fig. 1 näher dargestellten Sensorvorrichtung 100.

Die Ausgestaltung der Sensorvorrichtung 100 der Fig. 2 unterscheidet sich von der Sensorvorrichtung 100 der Fig. 1 darin, dass jede der vier Elektroden 112, 114, 122, 124 der beiden Elektrodenpaare 110, 120 unter einem anderen Abstand zum Schallwandler 130 angeordnet sind und dass der Schallwandler 130 ferner dazu ausgebildet ist, Schallwellen derart in das Fluid 12 auszusenden, dass diese an zumindest zwei vom Schallwandler 130 unter verschiedenen Abständen angeordneten Elektroden zum Schallwandler 130 zurück reflektiert werden. In der beispielhaften Ausgestaltung der Fig. 2 werden die Schallwellen an der ersten Elektrode 112, die unter dem vorbestimmten ersten Abstand 111 zum Schallwandler 130 angeordnet ist, und an der dritten Elektrode 122, die unter einem vorbestimmten zweiten Abstand 113 zum Schallwandler 130 angeordnet ist, reflektiert. Die Ausbreitungsrichtung der zur dritten Elektrode 122 ausgesandten Schallwellen ist in der Fig. 2 mit dem Pfeil 136 gekennzeichnet und die Ausbreitungsrichtung der an der dritten Elektrode 122 zum Schallwandler 130 zurück reflektierten Schallwellen ist in der Fig. 2 mit dem Pfeil 138 gekennzeichnet. Alternativ können die Schallwellen an anderen zwei Elektroden reflektiert werden, wie z. B. an der ersten Elektrode 112 und an der zweiten Elektrode 114.

Aufgrund der unterschiedlichen vorbestimmten Abstände 112, 113 ist es möglich, die Schallgeschwindigkeit im Fluid 12 basierend auf einer Laufzeitdifferenz der an der ersten Elektrode 112 und an der dritten Elektrode 122 reflektierten Schallwellen zu bestimmen. Dieses Messprinzip kann wiederum Störeinflüsse, wie beispielsweise die Laufzeiten durch die Wandung des Fluidbehälters 10, wenn der Schallwandler 130 zumindest teilweise außerhalb des Behälters 10 angebracht ist, kompensieren.

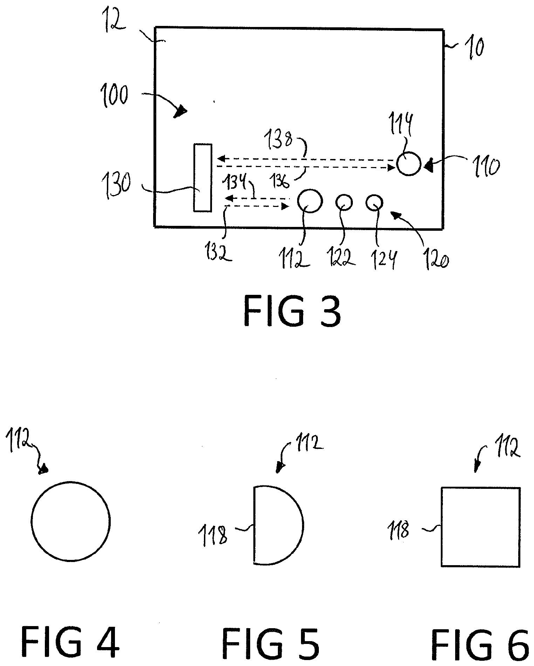

Die Fig. 3 zeigt eine noch weitere erfindungsgemäße Ausführungsform der Sensorvorrichtung 100, die sich zu den in den Fig. 1 und 2 gezeigten Sensorvorrichtungen 100 wieder in der Anordnung der Elektroden 112, 114, 122, 124 unterscheidet. Bei der Ausgestaltung der Fig. 3 ist die erste Elektrode 112 wieder unter dem vorbestimmten ersten Abstand 111 zum Schallwandler 130 angeordnet und die zweite Elektrode 114 wieder unter dem vorbestimmten zweiten Abstand 113 angeordnet. Die dritte Elektrode 122 und die vierte Elektrode 124 des weiteren Elektrodenpaars 120 sind dabei in einem Schallschatten der ersten Elektrode 112 angeordnet. Alternativ können die dritte Elektrode 122 und/oder die vierte Elektrode 124 im Schallschatten der zweiten Elektrode 114 angeordnet sein.

Dadurch kann zumindest teilweise verhindert werden, dass weitere Schallreflexionen an der dritten Elektrode 122 und/oder der vierten Elektrode 124 stattfinden, die die beabsichtigten Schallreflexionen verfälschen und die Bestimmung der Schallgeschwindigkeit beeinträchtigen können. Der Schallschatten bezeichnet dabei denjenigen Bereich hinter der ersten Elektrode 112, in den keine Schallwellen direkt vom Schallwandler 130 gelangen. Folglich ist es vorteilhaft, dass die dritte Elektrode 122 und/oder vierte Elektrode 124 sich senkrecht zur Schallwellenausbreitungsrichtung erstreckende Ausdehnungen haben, die jeweils kleiner sind als die entsprechenden Ausdehnungen der ersten Elektrode 112 und/oder zweiten Elektrode 114.

Bei der Ausgestaltung der Sensorvorrichtung 100 der Fig. 3 ist es bevorzugt, dass die dritte Elektrode 122 und die vierte Elektrode 124 des weiteren Elektrodenpaars 120 sich weiterhin im Wesentlichen in dem elektrischen Feld befinden, das durch Anlegen einer elektrischen Spannung an der ersten Elektrode 112 und der zweiten Elektrode 114 des ersten Elektrodenpaars 110 erzeugt wird.

Die Fig. 4 bis Fig. 6 zeigen jeweils unterschiedliche Ausgestaltungen für die Querschnittsform der ersten Elektrode 112. Es ist selbstredend, dass auch die zweite Elektrode 114, die dritte Elektrode 123 und die vierte Elektrode 124 jeweils die in den Fig. 4 bis Fig. 6 dargestellten Querschnittsformen aufweisen können. Außerdem ist an dieser Stelle festzuhalten, dass die Querschnittsformen sämtlicher Elektroden 112, 114, 122, 124 in einer Ausgestaltung der Sensorvorrichtung 100 nicht identisch sein müssen. Das heißt, dass die Elektroden 112, 114, 122, 124 in einer Ausgestaltung jeweils unterschiedliche Querschnittsformen aufweisen können.

Die Fig. 4 stellt eine kreisförmige Querschnittsform der ersten Elektrode 112 dar, die im Wesentlichen zylindrisch ausgestaltet ist. Der Durchmesser kann dabei variieren.

Die Fig. 5 stellt eine abgeflachte kreisförmige Querschnittsform der ersten Elektrode 112 dar. Insbesondere resultiert die Querschnittsform der Fig. 5 dadurch, dass der kreisförmige Querschnitt der Fig. 4 derart beschnitten wird, dass sich eine im Wesentlichen ebene Reflexionsfläche 118 ausbildet. Die im Wesentlichen ebene Reflexionsfläche 118 ist insbesondere dazu ausgebildet, die darauf auftreffenden Schallwellen wieder zurück zum Schallwandler 130 zu reflektieren. Je größer die ebene Reflexionsfläche 118 ist, desto größer ist der zum Schallwandler 130 zurück reflektierte Anteil der vom Schallwandler 130 ausgesandten Schallwellen.

Es kann bevorzugt sein, dass die im Wesentlichen zylindrische Elektrode 112 überwiegend einen kreisförmigen Querschnitt hat, jedoch an einer passenden Stelle die in der Fig. 5 gezeigte Querschnittsform abschnittsweise aufweist, damit an dieser passenden Stelle die im Wesentlichen ebene Reflexionsfläche 118 angeordnet ist.

Die Fig. 6 zeigt eine im Wesentlichen quadratische Querschnittsform der ersten Elektrode 112. Alternativ kann jede rechteckige Querschnittsform oder auch jede andere im Stand der Technik bekannte Querschnittsform für Elektroden verwendet werden.

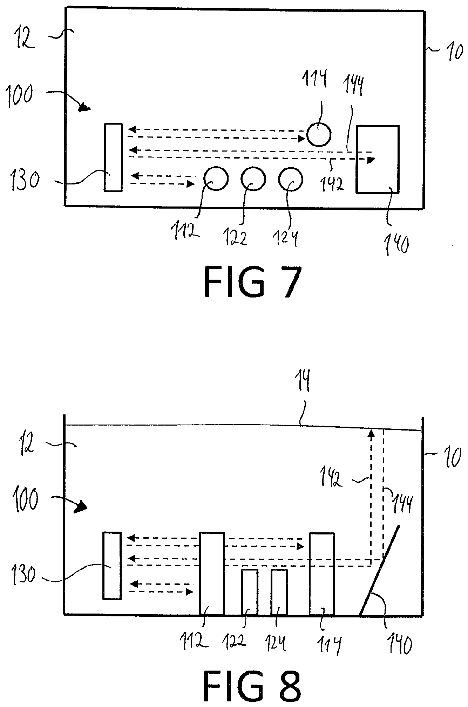

Die Fig. 7 und 8 zeigen eine weitere erfindungsgemäße Ausgestaltung der Sensorvorrichtung 100 und unterscheidet sich von der Sensorvorrichtung 100 der Fig. 3 dadurch, dass die Sensorvorrichtung 100 der Fig. 7 und 8 ferner ein Umlenkelement 140 aufweist, das im Fluid 12 innerhalb des Fluidbehälters 10 angeordnet ist. Das Umlenkelement 140 ist insbesondere dazu ausgebildet, vom Schallwandler 130 ausgesandte Schallwellen in Richtung der Fluidoberfläche 14 derart umzulenken, dass die Schallwellen an der Fluidoberfläche 14 reflektiert werden können und wieder über das Umlenkelement 140 zurück zum Schallwandler 130 reflektiert werden können. Der Schallpfad dieser Schallwellen ist in den Fig. 7 und 8 mit den Pfeilen 142 und 144 gekennzeichnet. Mittels des Umlenkelements 140 ist es möglich, neben der Schallgeschwindigkeit im Fluid 12 auch den Füllstand 14 des Fluids innerhalb des Fluidbehälters 10 basierend auf der bestimmten Schallgeschwindigkeit im Fluid 12 zu bestimmen.

## Patentansprüche

1. Sensorvorrichtung (100) zum Bestimmen der elektrischen Leitfähigkeit eines Fluids (12) und der Schallgeschwindigkeit im Fluid (12), wobei die Sensorvorrichtung (100) aufweist:
- zumindest ein Elektrodenpaar (110), das eine erste Elektrode (112) und eine von der ersten Elektrode (112) elektrisch isolierte zweite Elektrode (114) aufweist, die jeweils mit dem Fluid (12) in direktem Kontakt stehen, und dazu ausgebildet ist, die elektrische Leitfähigkeit des Fluids (12) nach dem konduktiven Prinzip zu bestimmen, und
- einen Schallwandler (130), der dazu ausgebildet ist, Schallwellen derart in das Fluid (12) auszusenden, dass die Schallwellen an der ersten Elektrode (112) und/oder zweiten Elektrode (114) zum Schallwandler (130) zurück reflektiert werden, und die zumindest an der ersten Elektrode (112) und/oder zweiten Elektrode (114) zum Schallwandler (130) zurück reflektierten Schallwellen zum Bestimmen der Schallgeschwindigkeit im Fluid (12) zu empfangen.

2. Sensorvorrichtung (100) nach Anspruch 1, wobei die erste Elektrode (112) und/oder zweite Elektrode (114) zumindest abschnittsweise im Wesentlichen zylinderförmig ist.

3. Sensorvorrichtung (110) nach einem der vorhergehenden Ansprüche, wobei die erste Elektrode (112) und/oder zweite Elektrode (114) zumindest abschnittsweise eine ebene Reflexionsfläche (118) aufweist, die dazu ausgebildet ist, die vom Schallwandler (130) ausgesandten Schallwellen zumindest teilweise zurück zum Schallwandler (130) zu reflektieren.

4. Sensorvorrichtung (100) nach einem der vorhergehenden Ansprüche, wobei die erste Elektrode (112) unter einem vorbestimmten ersten Abstand (111) zum Schallwandler (130) angeordnet ist und die zweite Elektrode (114) unter einem zum ersten Abstand (111) unterschiedlichen vorbestimmen zweiten Abstand (113) zum Schallwandler (130) angeordnet ist.

5. Sensorvorrichtung (100) nach einem der vorhergehenden Ansprüche, ferner mit:
- einem weiteren Elektrodenpaar (120), das eine dritte Elektrode (122) und eine von der dritten Elektrode (122) elektrisch isolierte vierte Elektrode (124) aufweist, die jeweils mit dem Fluid (12) in direktem Kontakt stehen, und dazu ausgebildet ist, die elektrische Leitfähigkeit des Fluids (12) nach dem konduktiven Prinzip zu bestimmen.

6. Sensorvorrichtung (100) nach Anspruch 5, wobei die dritte Elektrode (122) und/oder vierte Elektrode (124) in einem von der ersten Elektrode (112) und/oder zweiten Elektrode (114) erzeugten Schallschatten derart angeordnet sind, dass die vom Schallwandler (130) ausgesandten Schallwellen an der dritten Elektrode (122) und/oder vierten Elektrode (124) nicht zurück zum Schallwandler (130) reflektiert werden.

7. Sensorvorrichtung (100) nach einem der Ansprüche 5 und 6, wobei die dritte Elektrode (122) und/oder vierte Elektrode (124) sich senkrecht zur Schallwellenausbreitungsrichtung erstreckende Ausdehnungen haben, die jeweils kleiner sind als die entsprechenden Ausdehnungen der ersten Elektrode (112) und/oder zweiten Elektrode (114).

8. Sensorvorrichtung (100) nach einem der vorhergehenden Ansprüche, ferner mit einem Umlenkelement (140, das dazu ausgebildet ist, die vom Schallwandler (130) ausgesandten Schallwellen zum Bestimmen des Füllstands des Fluid (12) im Fluidbehälter (10) zumindest teilweise in Richtung der Fluidoberfläche (14) umzulenken, von der die Schallwellen wieder über das Umlenkelement (140) zurück zum Schallwandler (130) reflektiert werden.

9. Sensorvorrichtung (100) nach einem der vorhergehenden Ansprüche, wobei der Schallwandler (130) ferner dazu ausgebildet ist, zumindest teilweise außerhalb des Fluidbehälters (10) angeordnet zu werden.

## Claims

1. Sensor device (100) for determining the electrical conductivity of a fluid (12) and the speed of sound in the fluid (12), wherein the sensor device (100) has:
- at least one pair of electrodes (110) that has a first electrode (112) and a second electrode (114) electrically isolated from the first electrode (112), each of which is in direct contact with the fluid (12), and is designed to determine the electrical conductivity of the fluid (12) in accordance with the conductive principle, and
- a sound transducer (130) that is designed to emit sound waves into the fluid (12) in such a way that the sound waves are reflected back to the sound transducer (130) at the first electrode (112) and/or second electrode (114), and to receive the sound waves reflected back to the sound transducer (130) at least at the first electrode (112) and/or second electrode (114) in order to determine the speed of sound in the fluid (12).

2. Sensor device (100) according to Claim 1, wherein the first electrode (112) and/or second electrode (114) is essentially cylindrical at least in sections.

3. Sensor device (110) according to either of the preceding claims, wherein the first electrode (112) and/or second electrode (114), at least in sections, has a flat reflection surface (118) that is designed to at least partially reflect the sound waves emitted by the sound transducer (130) back to the sound transducer (130) .

4. Sensor device (100) according to one of the preceding claims, wherein the first electrode (112) is arranged at a predetermined first distance (111) from the sound transducer (130) and the second electrode (114) is arranged at a predetermined second distance (113), different from the first distance (111), from the sound transducer (130).

5. Sensor device (100) according to one of the preceding claims, furthermore having:
- a further pair of electrodes (120) that has a third electrode (122) and a fourth electrode (124) electrically isolated from the third electrode (122), each of which is in direct contact with the fluid (12), and is designed to determine the electrical conductivity of the fluid (12) in accordance with the conductive principle.

6. Sensor device (100) according to Claim 5, wherein the third electrode (122) and/or fourth electrode (124) are arranged in an acoustic shadow generated by the first electrode (112) and/or second electrode (114) in such a way that the sound waves emitted by the sound transducer (130) are not reflected back to the sound transducer (130) at the third electrode (122) and/or fourth electrode (124).

7. Sensor device (100) according to either of Claims 5 and 6, wherein the third electrode (122) and/or fourth electrode (124) have dimensions extending perpendicular to the direction of sound wave propagation that are each smaller than the corresponding dimensions of the first electrode (112) and/or second electrode (114).

8. Sensor device (100) according to one of the preceding claims, furthermore having a deflection element (140) that is designed to at least partially deflect the sound waves emitted by the sound transducer (130) in the direction of the fluid surface (14) in order to determine the fill level of the fluid (12) in the fluid container (10), from which the sound waves are reflected back to the sound transducer (130) again via the deflection element (140).

9. Sensor device (100) according to one of the preceding claims, wherein the sound transducer (130) is furthermore designed to be arranged at least partially outside the fluid container (10).

## Revendications

1. Dispositif capteur (100) destiné à déterminer la conductivité électrique d'un fluide (12) et la vitesse du son dans le fluide (12), le dispositif capteur (100) comprenant :
- au moins une paire d'électrodes (110), qui possède une première électrode (112) et une deuxième électrode (114) isolée de la première électrode (112), lesquelles sont respectivement en contact direct avec le fluide (12), et qui est configurée pour déterminer la conductivité électrique du fluide (12) selon le principe conducteur, et
- un transducteur acoustique (130), qui est configuré pour émettre des ondes acoustiques dans le fluide (12) de telle sorte que les ondes acoustiques sont renvoyées par réflexion au transducteur acoustique (130) au niveau de la première électrode (112) et/ou de la deuxième électrode (114), et recevoir les ondes acoustiques renvoyées par réflexion au transducteur acoustique (130) au niveau de la première électrode (112) et/ou de la deuxième électrode (114) en vue de déterminer la vitesse du son dans le fluide (12).

2. Dispositif capteur (100) selon la revendication 1, la première électrode (112) et/ou la deuxième électrode (114) étant au moins dans certaines portions de forme sensiblement cylindrique.

3. Dispositif capteur (110) selon l'une des revendications précédentes, la première électrode (112) et/ou la deuxième électrode (114) possédant au moins dans certaines portions une surface de réflexion (118) plane, laquelle est configurée pour renvoyer par réflexion au transducteur acoustique (130) au moins partiellement les ondes acoustiques émises par le transducteur acoustique (130).

4. Dispositif capteur (100) selon l'une des revendications précédentes, la première électrode (112) étant disposée à un premier écart (111) prédéterminé du transducteur acoustique (130) et la deuxième électrode (114) étant disposée à un deuxième écart (113) prédéterminé, différent du premier écart (111), du transducteur acoustique (130).

5. Dispositif capteur (100) selon l'une des revendications précédentes, comprenant en outre :
- une paire d'électrodes supplémentaire (120), qui possède une troisième électrode (122) et une quatrième électrode (124) isolée de la troisième électrode (122), lesquelles sont respectivement en contact direct avec le fluide (12), et qui est configurée pour déterminer la conductivité électrique du fluide (12) selon le principe conducteur.

6. Dispositif capteur (100) selon la revendication 5, la troisième électrode (122) et/ou la quatrième électrode (124) étant disposées dans une ombre acoustique générée par la première électrode (112) et/ou la deuxième électrode (114) de telle sorte que les ondes acoustiques émises par le transducteur acoustique (130) ne sont pas renvoyées par réflexion au transducteur acoustique (130) au niveau de la troisième électrode (122) et/ou de la quatrième électrode (124).

7. Dispositif capteur (100) selon l'une des revendications 5 et 6, la troisième électrode (122) et/ou la quatrième électrode (124) ayant des étendues qui s'étendent perpendiculairement à la direction de propagation des ondes acoustiques, qui sont respectivement plus petites que les étendues correspondantes de la première électrode (112) et/ou de la deuxième électrode (114).

8. Dispositif capteur (100) selon l'une des revendications précédentes, comprenant en outre un élément de déviation (140), qui est configuré pour, en vue de déterminer le niveau du fluide (12) dans le récipient à fluide (10), dévier les ondes acoustiques émises par le transducteur acoustique (130) au moins partiellement en direction de la surface du fluide (14), par laquelle les ondes acoustiques sont de nouveau renvoyées par réflexion au transducteur acoustique (130) par le biais de l'élément de déviation (140).

9. Dispositif capteur (100) selon l'une des revendications précédentes, le transducteur acoustique (130) étant en outre configuré pour être disposé au moins partiellement à l'extérieur du récipient à fluide (10).
